# EUROPEAN PATENT SPECIFICATION

(11) **EP 2 848 339 B1**
(45) Date of publication and mention of the grant of the patent: **28.03.2018**
(21) Application number: 13004486.0
(22) Date of filing: 13.09.2013
(51) Int. Cl.: B23B 51/02, B23P 15/32, E21B 10/58, E21B 10/44

(54) **Shaft for a drilling tool, drilling tool and method for manufacturing a drilling tool**
Welle für ein Bohrwerkzeug, Bohrwerkzeug und Verfahren zur Herstellung eines Bohrwerkzeugs
Manche pour outil de forage, outil de forage et procédé de fabrication d'un tel outil

(43) Date of publication of application: 18.03.2015
(60) Divisional application: 18156370.1
(73) Proprietor: Irwin Industrial Tool Company, Huntersville, NC 28078 (US)
(72) Inventor: Geier, Manfred, 82178 Puchheim (DE)
(74) Representative: Hurtig, Nahéma

(56) References cited:
- EP-A1- 1 024 247
- WO-A1-97/19247
- CH-A- 302 460
- DE-A1-102009 038 516
- DE-A1-102010 019 379
- US-A- 1 318 958
- US-A- 2 628 821
- US-A1- 2004 001 740

## Description

The invention refers to a shaft for a drilling tool, such as a masonry drill bit, a chisel or a twist drill bit, according to the preamble of claim 1. The invention also refers to a drilling tool comprising such a shaft, and to a method for manufacturing a drilling tool comprising such a shaft, according to the preamble of claim 9. Such a shaft is known from document CH 302 460 A1. A drill shaft for a drill bit is disclosed by EP 1 024 247 A1. A cutting insert of the drill bit comprises two main cutting edges and two auxiliary cutting edges and is fixed within an X-shaped recess on a working head portion of the drill shaft. The X-shaped recess is embodied by two straight slots or grooves extending across the work end face crossing each other so as to form the X-shape. The slots or grooves are milled into the shaft by diametrically cutting with a first finger miller along a first linear feeding direction through the work face and repeating this process using a second miller along a second linear feeding direction.

State of the art drilling tools, such as the above mentioned, operate with sophistically designed cutting inserts aiming for improved tool performance and durability at particular drilling tasks. The cutting inserts of high performance tools are usually made of hard metal and do not comprise only a single cutting plate but several cutting plates or complex drill head designs including a plurality of cutting edges. With more shaft space to be reserved for cutting inserts, higher form complexity and steadily increasing power of power tools used to drive the drilling tools, providing a reliable and durable connection between cutting insert and shaft of the drilling tool becomes a challenging task. Particularly, if a hard metal cutting insert is used, less elasticity of the cutting insert results in operating loads being transmitted rather directly to the connection between the cutting insert and the shaft, thereby potentially damaging the bond between the two tool parts on a long term.

EP 0 669 448 A1 refers to a masonry drill bit with a cutting insert comprising three cutting plates and a drill tip. The cutting plates and the drill tip are mounted within a star-shaped recess in the front side of the shaft of the drill. The star-shaped recess is constituted by three slots equally distributed along the circumference of the shaft and extending straight towards a drill center where a receiving portion for the drill tip is formed. In order to reliably fix the cutting plates on the shaft, each of the three slots is formed with an undercut relative to the extension direction of the shaft thereby achieving a form fit in axial direction. The drill is manufactured by initially milling undercut slots into the shaft and subsequently mounting the cutting plates within the slots. CH 302460 A1, US 1,318,958 A1, WO 97/19247 A1, US 2, 628,821 A1 and DE 10 2010 019 379 A1 disclose drill bits. US 2004/001,740 A1 shows a cutting insert for a drill.

It is the problem of the invention to overcome the drawbacks of the prior art, particularly to provide a shaft which allows to connect even voluminous drills heads and complexly shaped cutting inserts, particularly made of hard metal, safely and long-lastingly to the shaft.

The problem is solved by the subject-matter of the invention as defined by the independent claims, i.e. by a shaft according to claim 1, and by a method to manufacture a drilling tool comprising such a shaft, according to claim 9. Accordingly, a shaft for a drilling tool, such as a masonry drill bit, a chisel or a twist drill bit, comprises a longitudinal axis and a radial plane perpendicular to said longitudinal axis, a mounting portion for fixing said shaft to a tool, such as a power drill or a drill hammer, and a head portion located axially opposite said mounting portion and comprising a circumferential exterior surface extending substantially perpendicular relative to said radial plane. The head portion serves to shape-fittingly receive a cutting insert which usually is made of hard metal. It is in fact the cutting insert which cuts the material to be worked on. The head portion usually does not provide any cutting function, rather is adapted to firmly engage and fix the cutting insert to the shaft. The head portion forms a chucking seat structure at its axial front end and receives said cutting insert, as at least one cutting plate or a drill head. The shaft according to the invention does not need to readily comprise the cutting insert, the cutting insert can be mounted, particularly braced or soldered, at a later mounting stage. According to the invention said chucking seat structure comprises a wall surface arrangement which faces said insert, is perpendicular relative to said radial plane defined by the shaft and is cylindrically shaped and extends radially from said circumferential exterior surface of said head portion. The wall surface arrangement comprises just one or several cylindrical wall surface sections each having a constant radius. A plurality of wall surface sections can be radially arranged in a row wherein a radial change over between two wall surface sections is shaped as a longitudinally extending edge or border. According to one embodiment of the invention, the wall surface arrangement comprises at least two radially continuously extending wall surface sections each extending from one circumferential exterior surface to another. However, each of said wall surface sections extending from one circumferential exterior surface portion to the other may consist of a plurality of cylindrical wall surface sub-sections each having different radii.

By providing a cylindrically shaped wall surface section at least extending from the circumferential exterior surface of the shaft operative drilling loads and stresses are distributed more uniformly between chucking seat and the insert the shape of which is adapted to the wall surface section. The cylindrical wall surface avoids stress peaks, which are commonly responsible for gradual deterioration of a cutting insert fixation on the shaft, particularly at the outer circumference of the head portion, where the highest operating forces act. Thereby, a higher durability of the connection between the cutting insert and the chucking seat structure is achieved. Besides, a chucking seat structure comprising said cylindrical wall surface arrangement for receiving a cutting insert provides a different configuration for a head portion of a shaft allowing additional creative leeway for designing drill heads and fixation means for the drill heads on the shaft. The shaft of the invention can be manufactured using rather simply machining tools like a hole cutter or a curved band saw, usually operated reliably at high feeding velocity and low maintenance costs, owing to the chucking seat structure being shaped at least partially cylindrical at sides that face the cutting insert. Preferably, each wall surface section of the wall surface arrangement is shaped with one constant cylindrical radius. At least one cylindrical radius, particularly all cylindrical radii, is larger than 50%, particularly 100%, preferably 120% of the nominal radius of the head portion. Preferably, a cylindrical radius is chosen between 50 and 150% of the nominal radius of the head portion. Forming the wall surface with a large cylindrical curvature leads to a smooth force distribution along the surface. According to the invention, the chucking seat structure comprises a plurality of wall surface sections facing the form adapted cutting insert, each being perpendicular relative to the radial plane and cylindrically shaped and extending either away from the circumferential exterior surface or between others of the plurality of wall surface sections. The long-term durability of the fastening connection between cutting insert and shaft is further enhanced by this measure because operating forces are dispersed over the head portion to stress the chucking seat structure more uniformly. According to the invention, each of the plurality of wall surface sections comprises either a concave or convex cylindrical shape and has a corresponding counter wall surface section. The counter wall surface section has the same convex or concave cylindrical shape relative to a different center of cylindricity, compared to the corresponding wall surface section. Each wall surface section and its corresponding counter wall surface section face each other such that they provide a support face and a counter support face for fixing the cutting insert within the chucking seat structure.

In a preferred embodiment each of the plurality of wall surface sections is arranged axis-symmetric with respect to another of the plurality of wall surface sections, particularly relative to a diameter axis of the shaft, and/or rotationally symmetric with respect to at least one other of the plurality of wall surface sections relative to the longitudinal axis at an angle of 60°, 90°, 120° and/or 180°. The symmetrically arranged wall surfaces form an overall symmetry of the head portion improving true running characteristics of the shaft and allowing economic manufacturing.

In a preferred embodiment the chucking seat structure comprises at least one chucking jaw, at least a radially internal outside of which is formed at least partially by a wall surface section, and at least one further chucking jaw, at least a radially internal outside of which is formed at least partially by a wall surface section, which faces the insert, is perpendicular relative to the radial plane and cylindrically shaped and extends away from the circumferential exterior surface of the head portion. The chucking jaw and the at least one further chucking jaw are arranged radially diametrically to each other on the head portion, wherein in particular all radially internally orientated outsides of the chucking jaw and of the at least one further chucking jaw are formed by wall surface sections which are perpendicular relative to the radial plane and cylindrically shaped. The chucking jaws allow to fixedly hold a cutting insert there between, wherein the cylindrical wall surface sections partly forming the outside of the chucking jaws absorb maximum loads at percussion drilling more enduringly compared to state of the art shaft configurations.

In a preferred embodiment the wall surface arrangement intersects the circumferential exterior surface at an axial edge from which the wall surface arrangement extends away, the axial edge being straight and particularly perpendicular relative to the radial plane. Particularly the wall surface arrangement extends preferably uninterruptedly up to two intersection with the circumferential exterior surface, each forming the axial edge, which is circumferentially spaced apart by at least 30% of the circumferential length of the circumferential exterior surface.

In a preferred embodiment the chucking seat structure comprises at least two wall surface sections which are perpendicular relative to the radial plane and particularly cylindrically shaped to the same center of cylindricity as the wall surface particularly with a different cylinder radius. The two wall surface sections form a slot, which partly extends hollow-cylindrically radially through the head portion.

In a preferred embodiment the wall surface is formed by a sawing tool, particularly having an axial feed direction and/or the chucking seat structure is formed particularly exclusively by axially sawing into the head portion, preferably using a hole saw.

The invention refers also to a drilling tool, particularly a drill bit, such as a masonry drill bit, a chisel or a twist drill bit, which comprises a shaft according to the invention as described above and at least one cutting insert, like a cutting plate or a drill head. In particular the shaft comprises at least one helical groove for conveying cutting chips, preferably twisting around the shaft.

The invention finally concerns a method for manufacturing a drilling tool, such as a masonry drill bit, a chisel or a twist drill bit, as described above, comprising a shaft according to the invention, with a longitudinal axis, a radial plane extending perpendicular relative to the longitudinal axis, a mounting portion for fixing the shaft to a tool and a head portion located axially opposite the mounting portion and comprising a circumferential exterior surface extending substantially perpendicular to the radial plane, and a cutting insert to be fixed within the chucking seat structure. According to the invention a saw tool is used to form the chucking seat structure.

Preferably, the saw tool comprises a row of teeth particularly running along a loop-like closed path, wherein the row of teeth enters into cutting engagement with the head portion at an inbound cutting line of the circumferential exterior surface a leaves cutting engagement at an outbound cutting line of the circumferential exterior surface.

Preferably, the row of teeth is axially fed into the head portion and/or runs parallel relative to the radial plane. Preferably the loop-like closed path is at least partially, particularly completely, cylindrically curved between the inbound cutting line and the outbound cutting line, wherein in particular the radius of the cylindrically curved path is at least 50% of the nominal radius of the head portion of the shaft.

Preferably, the row of teeth is an endless row of teeth, and/or the saw tool is a hole saw or a band saw, wherein in particular a nominal diameter of the hole saw is larger than a minimum diameter of the head portion.

Preferably, the saw tool is moved at least two times, particularly exactly two, three, four or six times sequentially axially into cutting engagement with the head portion and out of cutting engagement to form the chucking seat structure, wherein in particular the shaft is rotated by a predetermined angle each time after the saw tool is moved out of cutting engagement. Preferably the sawing tool, particularly the feeding direction of the cutting tool remains stationary relative to the position of the shaft.

Preferably, a cutting insert such as at least a cutting plate or a drill head is fixed within the chucking seat structure after sawing, particularly by brazing or welding.

At least one of the aforementioned aspects of invention provides the following advantages: A less cost-intensive method for machining a shaft for a drilling tool having a complex shaped seat structure is provided. The cutting insert seat can be manufactured without milling the shaft, which speeds up process cycle time and decreases tool expenses as particularly small dimensioned millers are prone to break and require usually a low feed rate to avoid breaking and achieve accuracy.

Further characteristics, advantages and features of the invention follow from the below description of preferred embodiments by means of the enclosed drawings, wherein:
- Figure 1: shows a schematic top view of a shaft according to a first example, which is not according to the invention;
- Figure 2: shows a schematic top view of a shaft according to a first embodiment of the invention;
- Figure 3: shows a schematic top view of a shaft according to a second embodiment of the invention;
- Figure 4: shows a schematic top view of a shaft according to a third embodiment of the invention;
- Figure 5: shows a schematic top view of a shaft according to a second example, which is not according to the invention;
- Figure 6: shows a schematic top view of a shaft according to a third example, which is not according to the invention;
- Figure 7: shows a schematic top view of a shaft according to a fourth example, which is not according to the invention;
- Figure 8: shows a schematic top view of a shaft according to a fifth example, which is not according to the invention;
- Figure 9: shows a schematic top view of a shaft according to a fourth embodiment of the invention;
- Figure 10: shows a schematic top view of a shaft according to a fifth embodiment of the invention;
- Figure 11: shows a schematic top view of a shaft according to a sixth embodiment of the invention;
- Figure 12: shows a schematic top view of a shaft according to a seventh embodiment of the invention;
- Figure 13: shows a schematic top view of a shaft according to a sixth example, which is not according to the invention;
- Figure 14: shows a schematic top view of a shaft according to a seventh example, which is not according to the invention;
- Figure 15: shows a schematic top view of a shaft according to an eighth example, which is not according to the invention;
- Figure 16: shows a perspective view of a shaft according to the example of figure 1;
- Figure 17: shows a perspective view of a drill comprising a shaft according to the example of figure 16 and a cutting insert;
- Figure 18: shows a side view of the shaft of figure 17;
- Figure 19: shows a side view of the drill of figure 18
- Figure 20: shows a top view of the drill of figure 18;
- Figure 21: shows a schematic top view illustration of the manufacturing method according to the invention shown with reference to the embodiment of figure 11.

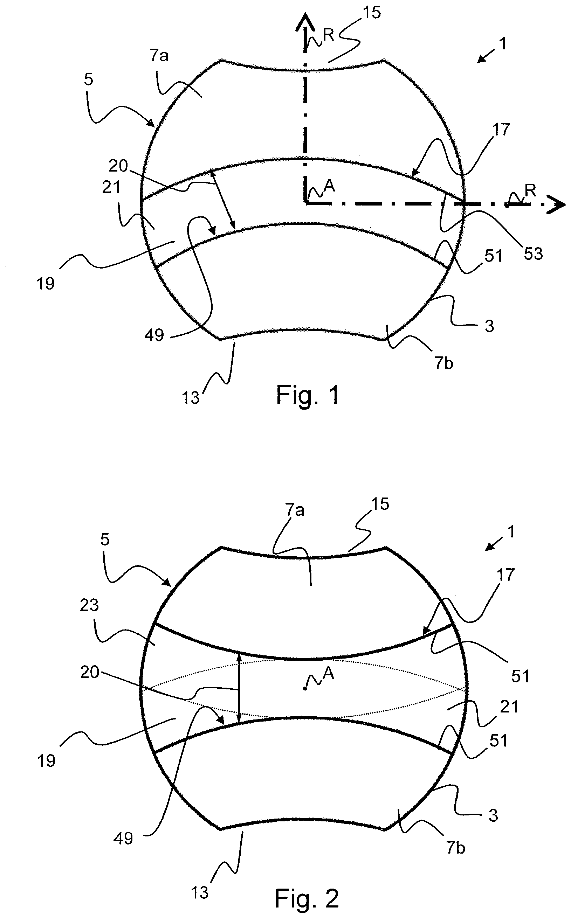

A shaft according to the invention is generally is designated by the reference numeral 1 in the accompanying drawings. The shaft 1 as shown in the examples of fig. 1, 5-8 and 13-16, which are not according to the invention, and in the embodiments of the invention of figures 2-4 and 9-12, is preferably configured to serve as a drill shaft, on the top of which a drill head or a cutting insert comprising one or more cutting plates or edges is fastened to form a drill bit. However, it is clear that the shaft as shown in the specific embodiments may be used as shaft for any other chiselling or drilling tool or for similar machining tools such as a finger miller or even a hand tool, like a screw driver.

In the examples and preferred embodiments the shaft 1 is an elongated substantially cylindrical metal member extending longitudinally along and around central longitudinal axis A, which in case of a rotating drill bit is the work rotation axis. Radial directions R which are perpendicular towards the longitudinal axis A span a radial plane R-R of the shaft 1. It is clear that the shaft according to the invention is not limited to a substantially cylindrical form but any other elongate rotationally symmetric member and even a rotationally asymmetric shank member in case of application to a slow or not rotating tool could benefit from the invention.

In all examples and embodiments the shaft 1 includes on one end a mounting portion (not shown), which is preferably adapted to be received within a tool holder of a tool, such as a percussion drill or drill hammer or a hand tool. In the case of a hand tool, the tool holder may be included in a gripping portion of the hand tool. The mounting portion can be shaped as a cylindrical stick or, in case of a different basis shape of the shaft 1, as a shape-continuing portion of the shaft 1 without any particular design features or can encompass the shape of a an adapter to a standard tool holder or power tool arbor, such as an SDS arbor. The shaft 1 comprises a head portion 5 on one axial end of the shaft 1 that is axially opposite the mounting portion. The head portion 5 is to be turned towards a work piece to an operating area where for example the drilling of the drill bit equipped with the shaft 1 occurs. The head portion 5 defines a circumferential exterior surface 3, being the radial outer boundary of the head portion 5.

As shown in all examples and embodiments a chucking seat structure 17 is formed on the head portion 5 to receive a cutting insert. The chucking seat structure 17 is constituted by chucking jaws or teeth 7a-7f axially extending from its bottom portion 19 of the seat structure 17. The cutting insert shall be form-fittedly received between the chucking jaws or teeth 7a-7f. Similarly to a drill chuck the chucking jaws 7a-7f radially line the cutting insert to securely fix it to the head portion 5, in a zero-play arrangement. To this end the chucking seat structure 17 may be dimensioned such that a press fit of the cutting insert within the seat structure 17 is provided. The chucking seat structure 17 and particularly each chucking jaws or teeth 7a-7f are radially limited by a wall surface arrangement 49 particularly formed by one or more wall surface sections 51, 53, 55 that extends axially perpendicularly relative to the radial shaft plane R-R and radially from one circumferential interior surface 3 portion of the head portion 5 to the other 3. In one axial direction the chucking seat structure 17 is limited by said bottom portion 19, parallel to the radial shaft plane. The wall surface sections 51, 53, 55 are illustrated in all figures 1 to 16, which show an axial planar projection of the head portion 5, by continuous lines. In the embodiments each wall surface section 51, 53, 55 of the chucking seat structure 17 extends radially (R), considering the planar projection, along one curvature. The wall surface arrangement 49 having at least one wall surface section 51, 53, 55 intersects the circumference exterior surface 3 of the head portion 5 at two distinct locations. The cutting insert receiving chucking seat structure 17 is radially open at the circumferential exterior surface 3.

As shown in several examples and embodiments, the shaft 1 may comprise one or two outside dust channels or grooves 13, 15 extending longitudinally (A) and ending at the axial front end of the head portion 5. The dust channels 13, 15 are arranged diametrically opposite of one and provide means for axially conveying bore dust, bore chips and/or cuttings away from the front end of the head portion 5. The dust channels 13, 15 may extend straight longitudinally (A) or even in helical turnings.

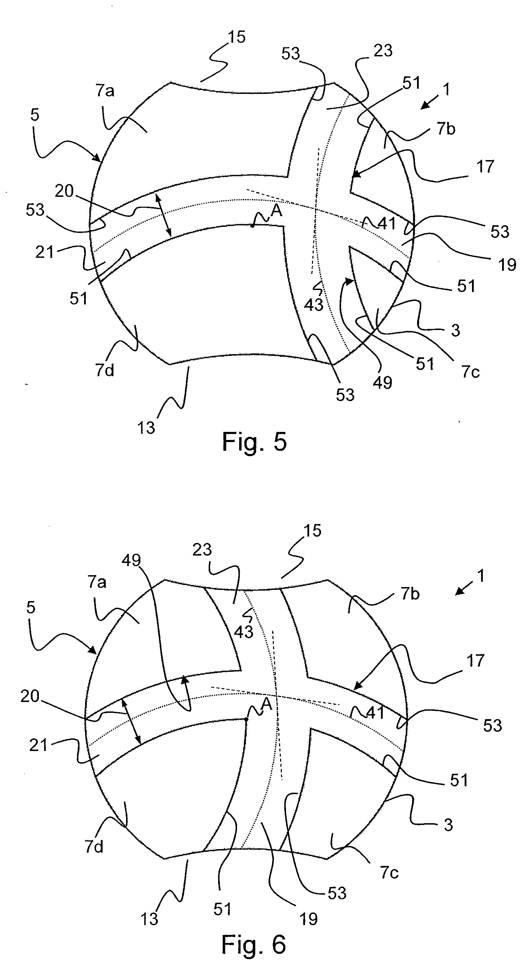

It is clear that such dust channels may be placed, where it appears to be technically most appropriate with respect to discharging cuttings or bore dust, generated by tool operation. As shown in figure 6, in the case of a drill bit, at least two dust channels 13, 15 are located at two of the radially outer openings of the chucking seat structure 17, which usually coincide with radially outer ends of a cutting insert or cutting plates mounted within the cutting seat structure 17.

A first example of the shaft 1, which is not according to the invention, as shown by figure 1, forms the cutting seat structure 17 exclusively by a convex cylindrical wall surface section 51 and a parallelly extending concave cylindrical wall surface section 53, which form a slot 21 there between extending from one side of the shaft 1 to the diametrically opposite side of the shaft 1, particularly through the entire head portion 5. The cylindrical wall surface sections 51, 53 radially confine the slot 21 to be hollow-cylindrical or annulus. Each of the wall surface sections 51, 53 realizes a contact face between a chucking jaw or tooth 7a, 7b and the cutting insert to be fixed within the seat 17. The wall surface sections 51, 53 are manufactured by cutting with a hollow cylindrical hole saw or a band saw, the saw band of which is guided in the cutting engagement area along a hollow-cylindrical path, into the head portion 5. The hole saw or band saw is fed axially into the head portion 5. The endless saw blade of the hole saw or the band saw enters along a closed running path the head portion 5 at an inbound portion of intersection with the circumferential exterior surface 3 and leaves the head portion 5 at an outbound portion of intersection with the exterior surface, thereby excavating the slot 21.

A first embodiment of the shaft 1, according to the invention, as shown by figure 2, resembles in almost all aspects the example of figure 1, however differs in that the wall surface sections 51, 53 of the chucking teeth 7a, 7b of the chucking seat structure 17 are both convex wall surface sections 51 arranged axis symmetrically on the head portion 5. The centers of cylindricity of the wall surface sections 51 are opposite of each other relative to the longitudinal axis A. The wall surface sections 51 are formed by cutting two hollow-cylindrical slots 21, 23 into the head portion 5, which are arranged such that central lines of each of the slots 21, 23 coincide with one another tangentially at the longitudinal axis A of the shaft 1. The central line (not shown) of a slot is a central curved arc between the radially most inner and the radially most outer cylindrical wall of the slot. The slots 21, 23 have both the same shape and size, i.e. a section of an annulus, but are oppositely oriented. The slots 21, 23 are cut such that a complete overlap as regards the width of the slots 21, 23 is provided at the centre of their extensions, which coincides with the longitudinal axis A. The specific overlapping arrangement causes that only one wall surface formed at cutting a specific slot, particularly the radially inner lateral wall surface, of each of the slots 21, 23 remains, while the other wall surface lies within the space machined when forming the other of the slots 21, 23, respectively. The course of the saw tool boundaries at manufacturing the head portion 5 is illustrated in fig. 2 by dotted lines. The chucking seat structure 17 defines substantially an X-shape by the remaining wall surface section 51.

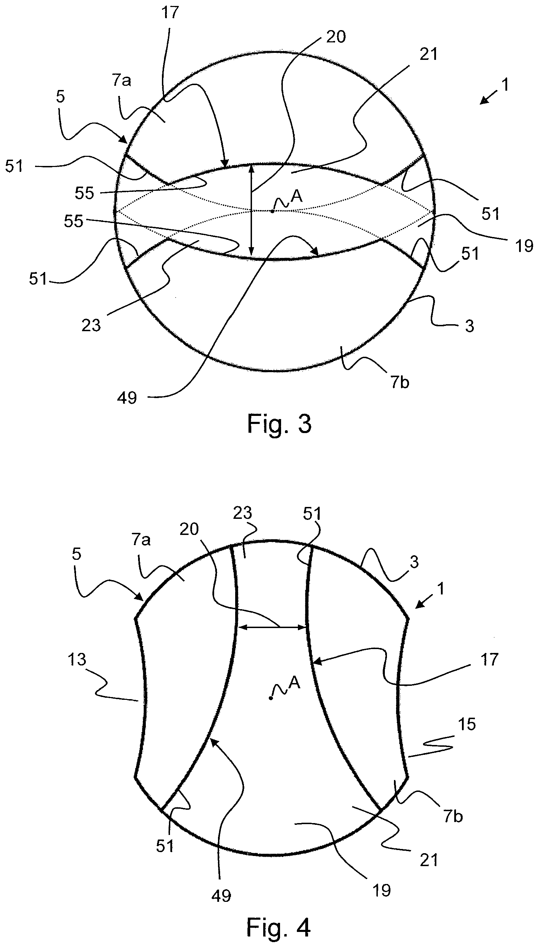

A second embodiment of the invention, as shown in figure 3, resembles in almost all aspects the previous example and embodiment, however differentiates particularly over the embodiment of figure 2 in that the wall surface arrangement 49 comprises two opposing rows of wall surface sections each having three sub-sections 51-55-51. The central cylindrical sub-section 55 is concave while the radially externally arranged sub-section 51 is shaped cylindrically convex. Besides, no dust grooves are provided. The skilled person will appreciate that grooves as shown for the previous example and embodiment may be encompassed by the embodiment of figure 3 in the same or a similar way. All of the sections 51, 55 comprise the same radii. When manufacturing the chucking seat structure 17, two ring slots 21, 23 are cut by two different sawing operations into the head portion 5. For the embodiment of figure 3 sawing tools are positioned such that the radially inner side of the tools cutting the slots 21, 23 coincide tangentially on the longitudinal axis A and in the centre of the slot extensions. The contact faces of the chucking teeth are formed by the two convex wall surface (sub-)sections 51 enclosing symmetrically and radially a concave wall (sub-)surface section 55. The row of wall surface (sub-)sections 51-55-51 forms an uninterrupted contact face for each of both chucking teeth 7a, 7b, including two radial constrictions at cross over edges between the wall surface (sub-)sections 51, 55. The longitudinal constrictions are located at about 2/3 of the distance from the longitudinal axis A to the radially outer end of the chucking seat structure 17. The longitudinal constrictions serve to form fit a cutting insert in the chucking seat structure 17 for providing additional connection quality. The width of the chucking seat structure 17 is increased at the radial centre to two times the width of the sawing tool cutting the slots 21, 23.

A third embodiment of the invention, as shown in figure 4, resembles in almost all aspects the second embodiment of figure 2 but differs by the wall surface sections 51 of the chucking seat structure 17 extending exclusively cylindrically relative to a center of cylindricity which is displaced towards one side of the shaft (compared with embodiment of figure 2). By cutting the hollow-cylindrical slots 21, 23 relative to a different center, the chucking seat structure 17 substantially provides a Y-shape. The maximum overlap between the cut slots 21, 23 is provided at about the half of the distance from the longitudinal axis A to a narrower of the two radially outer ends of the chucking seat structure 17. The radially outer wall surface (removed due to the overlap) of each of the slots 21, 23 coincides imaginarily tangentially with the radially inner wall surface of the other of the slots 21, 21 at the position of maximum overlap. The embodiment figure 4 is special in that the chucking seat structure 17 opens at the one circumferential exterior surface portion 3 in a smaller extend than on the opposing circumferential exterior surface portion.

A second example, shown in figure 5, and which is not according to the invention, is similar to the example of figure 1, however with the difference of realizing a second cylindrically curved slot 23 that is cut into the head portion 5 such that it intersects the curved slot 21 in an angle of between 70° to 110°. Particularly the tangents the centre lines of the curved slots 21, 23, as shown by dotted and dashed lines, intersect at an angle of about 80° and 100° forming a central overlap (a slot crossing) between the curved slots 21, 23. Furthermore, the constantly cylindrical wall surface sections 51, 53 of curved slot 23 are spaced further apart than the wall surfaces of curved slot 21. The distance between wall surface sections 51, 53 is indicated by reference numeral 20. While the cylinder radius defining the radially inner wall surface section 51 of the slots 21, 23 is equal for both, the radius of the radially outer wall surface section 53 of the curved slot 23 is larger than the one of slot 21. Cutting two substantially perpendicularly intersecting slots 21, 23 into the head portion results in four chucking teeth 7a-7d being formed on the head portion 5, wall surface sections 51, 53 of which are formed according to the hollow-cylindrical slots cut into the head portion 5.

Figure 6 shows a third example of the shaft 1, which is not according to the invention, and which resembles in most aspects the example of figure 5 and can be differentiated only by the wall surface sections 51, 53 of slot 23 being oppositely curved relative to the longitudinal axis A. The wall surface section 51 which is radially closer to the longitudinal axis A is convex while it is concave in the previous embodiment, and the wall surface section 53 which is radially more spaced apart from the longitudinal axis A, is concave while it is convex in the previous embodiment. Moreover, the area of intersection between the curved slots 21 and 23 is located more centrally on the head portion 5.

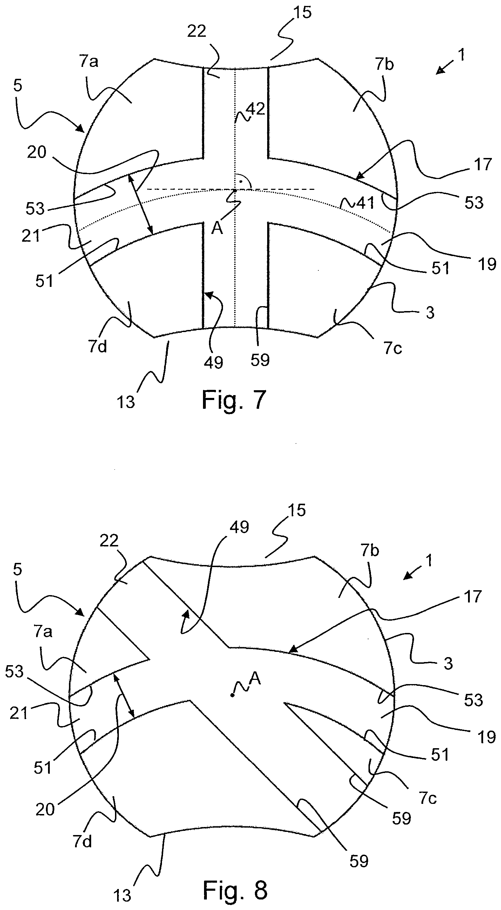

A fourth example, illustrated in figure 7, and which is not according to the invention, is most similar to the example of figure 6. The difference between the examples of figures 6 and 7 is in that the second slot 22 is sawed straight and diametrically across the head portion 5, wherein its centre line coincides with the longitudinal axis A. The second slot 22 forms straight wall sections. Of course, the cutting insert is shaped also accordingly with respect to the straight slot 22. The slot 21 still forms constantly cylindrical wall surface sections 51, 53. Both slots 21, 22 are cut such that an area of intersection is substantially provided around the longitudinal axis A uniformly and particularly equally distributed. By cutting straight through the head portion 5, one of two outer wall surfaces facing the cutting insert of each chucking teeth is formed planar and perpendicular relative to the longitudinal axis A.

Figure 8 illustrates a fifth example, which is not according to the invention, sharing most constructional details with the example of figure 7. The only specifics of the example of figure 8 are that the hollow-cylindrical slot 21 is machined into the head portion such that the course of its radially inner wall surface section 51 coincides with the longitudinal axis A. The straight slot 22 extends diagonally over the head portion 5. While in the previous example the chucking teeth are substantially equally distributed and have substantially the same volume, the fifth example provides two larger dimensioned main chucking teeth 7b, 7d, which may serve to predominantly absorb forces from longer main cutting edges of a cutting insert.

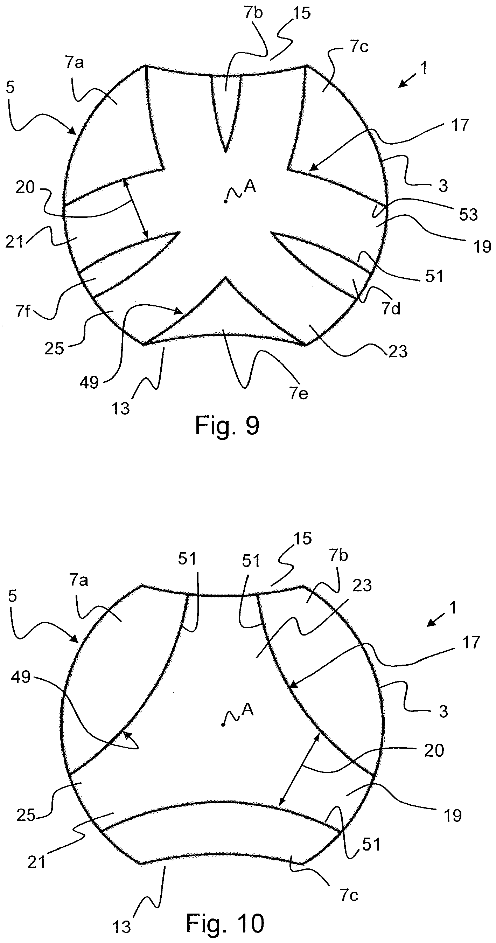

Figure 9 shows a fourth embodiment which resembles in many aspects the previous examples and embodiments, wherein however the chucking seat structure 17 is formed by sawing three equally configured hollow cylindrical slots 21, 23, 25 diametrically and positioned rotational symmetrical at an angle of 120° to each other into the head portion 5. The chucking seat structure 17 formed by sawing the slots 21, 23, 25 consists of six chucking teeth 7a-7f, each surface facing inside of which constitutes a wall surface section 51, 53. Tangents to middle of extension of the centre lines of the slots 21, 23, 25 over the front face 11 enclose pairwise an angle of 60° or 120°. The longitudinal axis A is located in the centre of a uniform triangle spanned by the tangents.

A fifth embodiment of the invention is illustrated in figure 10 and resembles as far as manufacturing is concerned in almost all aspects the fourth embodiment and can be differentiated by the positions, where the slots 21, 23, 25 have been sawed into the head portion 5. The slots 21, 23, 25 are sawed such that pairwise their complete widths overlap at the radially outer ends of their extension across the head portion 5. In other words the centers of cylindricity of the hollow-cylindrical saw tool forming the slots 21, 23, 25 are at larger distances from the longitudinal axis A compared to the previous embodiment but work with the same shaping cylinder radius. The chucking seat structure 17 formed due to this process has a triangular equal sided Y- shape. The chucking seat structure 17 comprises exactly three chucking teeth 7a-7c, each having a single concave wall surface section 51 extending uninterruptedly from an inbound intersection line with the circumferential exterior surface 3 towards an outbound intersection line and facing the insert.

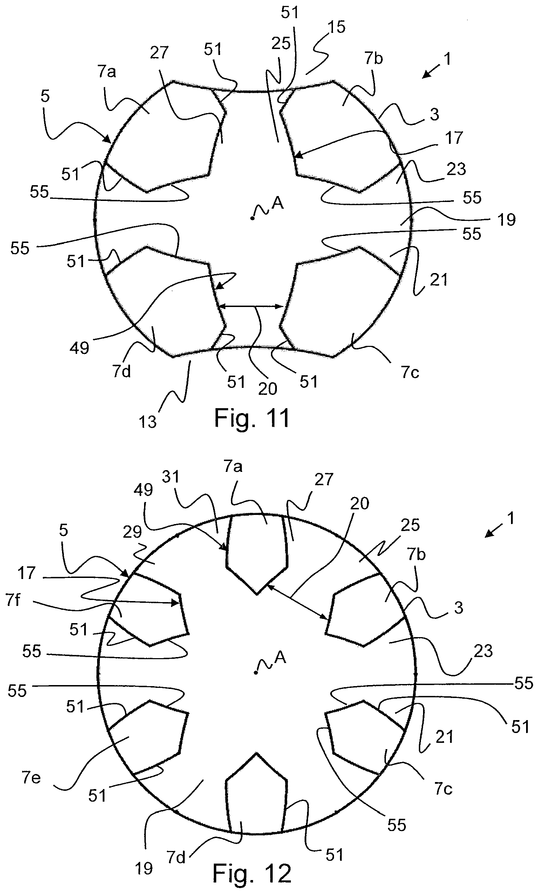

Figure 11 illustrates a sixth embodiment of the invention, which is similar to the embodiment particularly shown in figure 3 apart from sawing a second pair of slots 25, 27 into head portion 5 to form the chucking seat structure 17. Additionally to the two slots 21, 23 and the two grooves 13, 15 being placed on the perimeter of the shaft at the radially outer end of the slots 25, 27, the second pair of slots 25, 27 is sawed perpendicularly to the first pair of slots 21, 23 into the head portion 5. Thereby, a generally cross-shaped chucking seat structure 17 is formed, each cross-leg of which is constituted by substantially X-shaped slot portion. The chucking seat structure 17 comprises four substantially equal chucking teeth 7a-7d, each having a cutting insert facing outside formed by four cylindrical wall surface sections 51, 55. Two of the four wall surface sections 51, 55 are concave wall surface sections 51 extending away from the circumferential exterior surface 3. The other two of the four wall surfaces 51, 55 are each an interconnecting convex wall surface section 55 that extend from one of the two concave wall surface sections 51 to the other of the two interconnecting convex wall surface sections 55, respectively. At each intersection of wall surfaces 51, 55 a constriction (a cross over edge) of the chucking seat structure 17 is formed, thereby providing various form fit interfaces.

Figure 12 shows a seventh embodiment of the invention, which is similar to the foregoing examples and embodiments particularly of figures 3 and 11, however, differs by the chucking seat structure 17 being formed by sawing two additional pairs or one additional pair of slots 25, 27; 29, 31, respectively, apart from the pair of slots 21, 23 already shown in figure 3 into the head portion 5. The pairs of slots 21, 23; 25, 27; 29, 31 sawed equally distributed along the perimeter of the shaft 1 and enclose each pair an angle of 60° to an adjacent of the pairs. The so formed chucking seat structure 17 comprises six equally formed chucking teeth 7a-7f resembling the characteristics of the chucking teeth of the previous embodiment, however being smaller dimensioned.

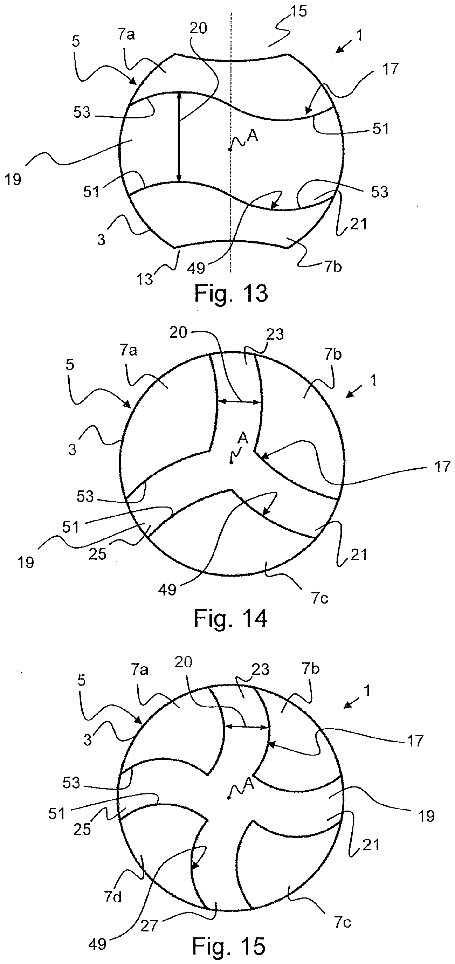

Figure 13 shows a sixth example, which is not according to the invention, which resembles in many aspects the example of figure 1 and differs by two chucking teeth each having an underlatingly shape wall surface arrangement 49 being constituted by a concave wall surface section 53 and a connecting convex wall surface section 51 of equal cylinder radius converging into each other at a center of chucking tooth extension across the head portion 5, and by the distance between the chucking teeth being about double compared to the example of figure 1. The chucking seat structure 17 is formed by cutting one slot 21 or several parallelly extending slots sequentially into the head portion preferably using a band saw. The closed path along which the saw blade of the band saw runs encompasses a section which is formed substantially S-shaped according to two cylindrical converging portions for forming the two wall surface sections 51, 53. The saw blade is guided by suitable guiding means such as guiding rails or deflection rollers along its closed path.

Figure 14 shows a seventh example, which is not according to the invention, resembling in many aspects the above examples and embodiments particularly of figure 1 but differentiating by the fact that three slots 21, 23, 25 are sawed into the head portion 5 of the shaft 1 to constitute the chucking seat structure 17 and that the slots 21, 23 extend from a radially outer end opening to the outside of the shaft 1 up to the longitudinal axis A. The slots 21, 23, 25 are sawed uniformly distributed so as to be circumferentially equally spaced apart. Tangents to the slots 21, 23, 25, particularly the centre lines of the slots, intersect at an angle of 120°. Further, no grooves 13, 15 are realized but could be implemented as shown in the previous examples and embodiments, or one groove at each radial outer end of the slots 21, 23, 25. From a manufacturing point of view the example of figure 14 is preferably sawed using a suitably flexible saw blade guided along a section of its closed running path cylindrically along at least the length of the cylindrical wall surface section 51 to be formed. The saw blade may be deflected at leaving the section to a different guiding direction, particularly to another cylindrical guiding section to form a further cylindrical wall surface section 51.

Figure 15 shows an eighth example, which is not according to the invention, and which resembles in most aspects the aforementioned examples and embodiments particularly of figure 14, however differentiates in that the chucking seat structure 17 is constituted by machining four slots 21, 23, 25, 27 equally distributed around the circumference into the head portion 5.

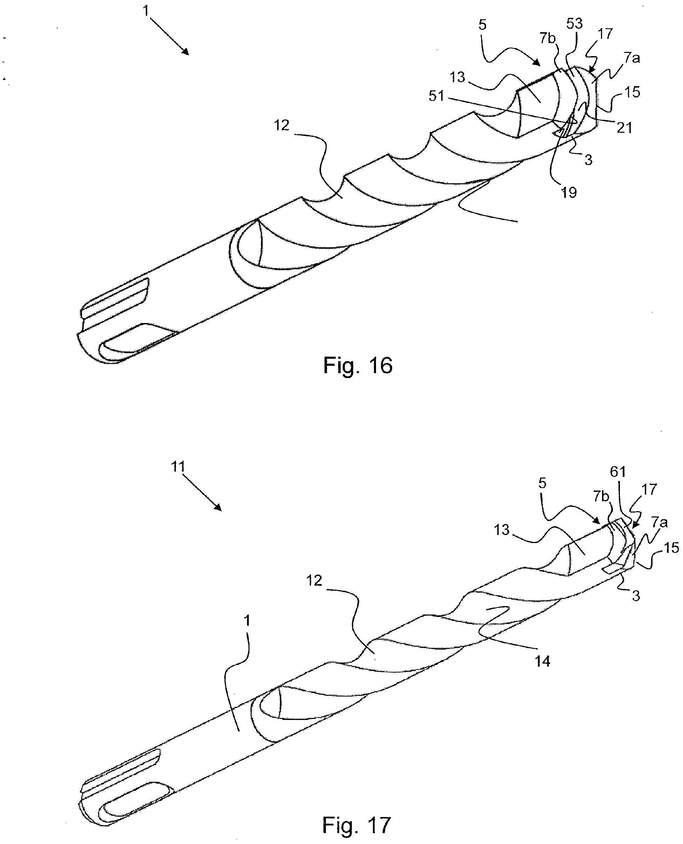

As can be seen from figure 16, showing the shaft of figure 1 in a perspective view, helical flutes or turnings 12, 14 extend from the bore dust removal grooves 13, 15 along the shaft 1. It should be clear to the skilled person that the helical turnings maybe formed at any time during the manufacturing process, i.e. before or after forming the chucking seat 17 in to the head portion 5 of the shaft 1, and may be formed in a different way suitable for the purpose of the shaft. The slot 21 for receiving a tool tip, such as a cutting insert, extends diametrically through the head portion 5 of the shaft so that each of the surfaces 51, 53 extends from a first position on the circumferential exterior surface 3 of the shaft and ends on a second position of the circumferential surface 3, which is circumferentially spaced apart from the first position by about 150° to 180° relative to the longitudinal axis A of the shaft 1.

In figure 17 the shaft 1 according to the examples of figures 1 and 16 is used to build a drill 11 by mounting a cutting insert 61 that is fittingly installed into the chucking seat 17 defined by the chucking jaws 7a, 7b. As the chucking seat 17 extends curvedly over the head portion 5, a cutting insert 61 set still detachably into slot 21 tends less to change its original position, whereby handling during the manufacturing process is facilitated.

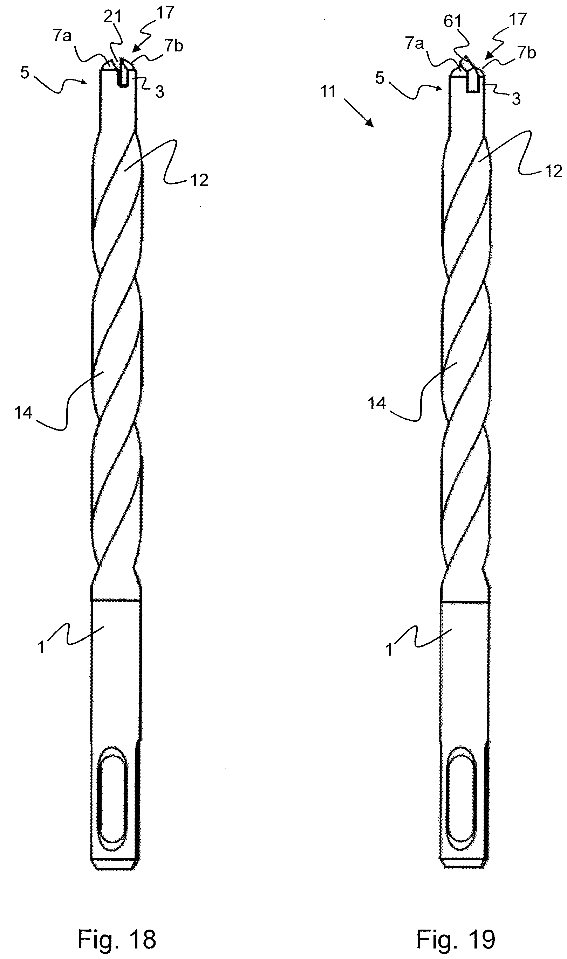

Figure 19 shows a side view of the shaft of figure 17. In this illustration it is easy to observe how the chucking jaws 7a, 7b are diametrically spaced apart to define a gripping space to receive a tool tip like a cutting insert.

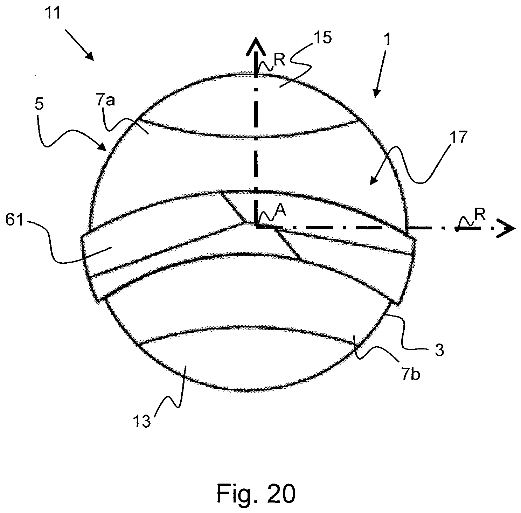

Figure 20 shows a side view illustration of the drill 11 shown in figure 18, in which the cutting insert 61, which is not according to the invention, is gripped between the jaws 7a, 7b of the chucking seat 17.

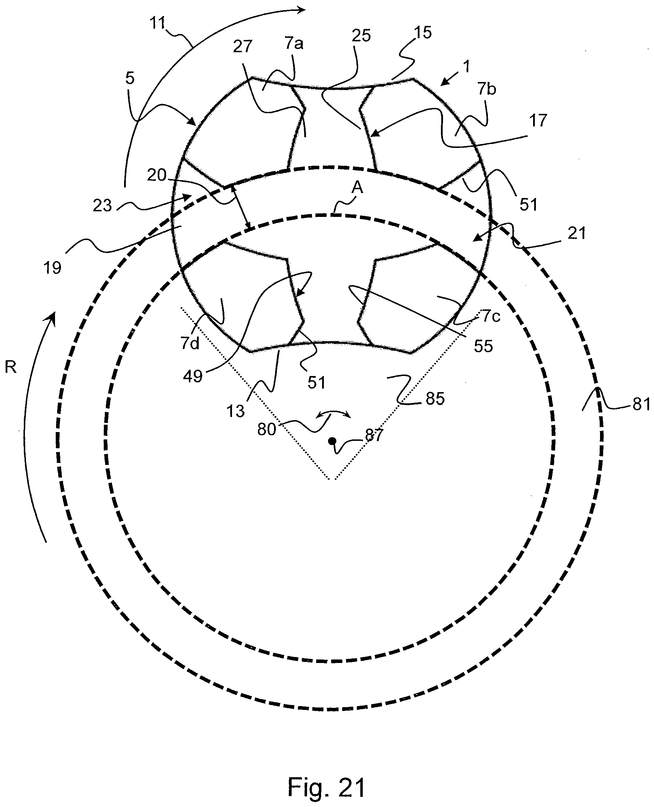

In figure 21 a top view of the drill 11 is shown, wherein the cutting insert 61 is fit into the chucking seat structure 17. The cutting insert 61 is complementarily form-adapted to the chucking seat structure 17 to provide direct force transmission between cutting insert and shaft 1 of the drill 11.

In the examples and embodiments of figures 1 to 3, 5 to 9 and 11 to 20, the shape of the chucking seat structure 17 is defined as the union of the geometric shapes of the slots cut into the head portion 5. In the embodiments of figures 4 and 10, considering the union of the cut slots 21, 23 and 21, 23, 25, respectively, it appears that after cutting the slots out of the head portion 5, small material bridges separating the slots remain, which are removed separately. For that purpose the slot cutting tool and/or the shaft 1 may displaced relatively to each other slightly, preferably by rotating the shaft 1.

Referring to figure 21, the method of manufacturing a drilling tool, particularly the step of machining a chucking seat structure 17 into the shaft of the drilling tool is exemplarily explained with respect to the shaft embodiment of figure 11 and using a or hole cutter or hole saw 81. In the figure 16 the shaft 1 is shown already in its final state after the chucking seat structure 17 has been manufactured by sawing exactly four times into the shaft. The hole saw 81 comprises saw blade with a row of teeth which is hollow-cylindrically arranged on the hole saw 81 so as to provide an endless row of teeth. The hollow-cylinder formed by the row of teeth is dimensioned and arranged relative to the longitudinal axis 9 of the shaft 1 such that its course intersects the perimeter of the shaft. The radial width of the hollow-cylinder, defined by the dimension of the row of the teeth perpendicular relative to the cutting direction of the teeth, determines the width 20 of the slot sawed into the shaft. In the example the inner radius 85 of the hollow cylinder is about 150% of the maximum radius of the head portion 5 of the shaft. As indicated by arrow R the hole saw 81 rotates around an rotation axis 87, wherein the cutting teeth move within a radial plane perpendicular relative to the rotation axis 87. The rotation axis 87 is substantially parallel relative to the longitudinal axis 9 and the hole saw 81 is fed along is rotation axis axially into the shaft 1 thereby machiningly excavating a hollow-cylindrical slot 21 from the head portion 5. The slot 21 is formed over a cylinder sector angle 80 of about 80° in the example.

Subsequently to forming a first slot 21, a second slot 23 can be sawed in the same way as described before with respect to slot 21. It is most efficient to form a rotational symmetric chucking seat structure 17 by just rotating the shaft 1 around its longitudinal axis A about a predetermined angle of symmetric, as indicated by rotation direction 11 and to saw subsequently with the same hole saw 81 into the rotated head portion 5.

It is clear that in case that the chucking seat structure 17 is composed of slots of different kind as regards to cylindricity, straightness or width, any subsequent slots are sawed with a different sawing tool, such as different hole saw, a band saw or a circular saw to account for the different configuration of the subsequent slots. It is clear that instead of a hole saw 81, a band saw guided along hollow-cylindrical path and any sequence of different or equal shaped sawing tools can be applied to form the slots constituting the chucking seat structure 17. The skilled person appreciates that the previously shown embodiments can be manufactured very easily by cutting several times with the hole cutter 81 into the shaft 1 and that the shaft 1 has just to be rotated and potentially slightly displaced by a specific angle between the different cutting strokes, whereby the manufacturing processes is rendered fast and effective. Further, since the feed direction of the cutting tool is parallel to the longitudinal extension of the shaft 1 machining inaccuracies owing to flexural bending of the shaft are reduced to the greatest extent.

The features disclosed in the above description, the figure and the claims can be significant for the realization of the invention in the different embodiments, either alone as well as in combination, within the scope of the claims.

### List or reference numerals

- 1: shaft
- 3: circumferential exterior surface
- 5: head portion
- 7a-7f: chucking jaw
- 11: drill
- 12, 14: helical turnings
- 13, 15: grooves
- 17: chucking seat structure
- 19: bottom portion
- 20: slot width
- 21, 22, 23, 25, 27, 29, 31: slots
- 41, 42, 43: centre lines
- 51: convex wall surface
- 53, 55: concave wall surface
- 59: straight wall surface
- 61: cutting insert
- 80: inner arc angle of slot
- 81: cutting tool
- 85: inner radius
- 87: rotation axis of the cutting tool
- A: longitudinal axis
- R: sawing radial direction

## Claims

1. A shaft (1) for a drilling tool, such as a masonry drill bit, a chisel or a twist drill bit, said shaft defining a longitudinal axis (A) and a radial plane (R-R) perpendicular to said longitudinal axis (A), wherein said shaft comprises a mounting portion for fixing said shaft (1) to a tool, such as a power drill or a drill hammer, and a head portion (5) for shape-fittingly receiving a cutting insert of said drilling tool, said head portion (5) comprising a circumferential exterior surface (3) extending substantially perpendicular relative to said radial plane (R-R) and forming a chucking seat structure (17) at its axial end for receiving said cutting insert, wherein said chucking seat structure (17) forms a wall surface arrangement (49) facing said insert and being substantially perpendicular relative to said radial plane (R-R) wherein said wall surface arrangement (49) is cylindrically shaped and extends away from said circumferential exterior surface (3) of said head portion (5), wherein said chucking seat structure (17) comprises a plurality of wall surface sections (51, 53, 55) facing said cutting insert, each being perpendicular relative to said radial plane (R-R) and cylindrically shaped and extending either away from said circumferential exterior surface or between others of said plurality of wall surfaces (51, 53, 55), wherein each of said plurality of wall surface sections (51, 53, 55) comprises a concave or convex cylindrical shape,
**characterised in that** each of said plurality of wall surface sections (51, 53, 55) is associated to a counter wall surface section (51, 53, 55), having the same concave or convex cylindrical shape relative to a different center of cylindricity, wherein each of said plurality of wall surface sections (51, 53, 55) and its corresponding counter wall surface section (51, 53, 55) face each other such that they provide a support face and a counter support face for fixing said cutting insert within said chucking seat structure (17).

2. Shaft (1) according to claim 1, **characterized in that** said wall surface arrangement (49) comprises at least one cylinder radius which is larger than 50%, particularly larger than 100%, preferably between 80% to 150% of the nominal radius of said head portion (5).

3. Shaft (1) according to claim 1 or 2, **characterized in that** said each of said plurality of wall surface sections (51, 53, 55) is arranged axis-symmetric with respect to another of said plurality of wall surface sections (51, 53, 55), particularly relative to a diameter axis of said shaft (1), and/or rotationally symmetric with respect to at least one other of said plurality of wall surface sections (51, 53, 55) relative to said longitudinal axis (A) at an angle of 60°, 90°, 120° and/or 180°.

4. Shaft (1) according to any of the preceding claims, **characterized in that** said chucking seat structure comprises at least one chucking jaw (7a-7f), an outside of which is formed at least partially by said wall surface section (51, 53), and at least one further chucking jaw (7a-7f), an outside of which is formed at least partially by a wall surface section (51-53), which faces said insert, said chucking jaw (7a-7f) and said at least one further chucking jaw (7a-7f) being arranged radially diametrically to each other.

5. Shaft (1) according to any of the preceding claims, **characterized in that** said wall surface (49) intersects said circumferential exterior surface (3) at an axial edge from which said wall surface section (51, 53) extends away, said axial edge being straight and particularly perpendicular relative to said radial plane (R-R), and/or extends particularly uninterruptedly up to an intersection with said circumferential exterior surface (3).

6. Shaft (1) according to any of the preceding claims, **characterized in that** said chucking seat structure (17) comprises at least two wall surface sections particularly cylindrically shaped to the same center of cylindricity particularly with a different cylinder radius, wherein particularly said two wall surface sections (51, 53) form a slot (21, 23, 25, 27, 29, 31), which extends partly hollow-cylindrically through said head portion.

7. Shaft (1) according to any of the preceding claims, **characterized in that** said wall surface (49) is formed by a sawing tool, particularly having an axially working feed direction and/or **in that** the chucking seat structure (17) is formed particularly exclusively by axially sawing into the head portion.

8. A drilling tool, particularly a drill bit, such as a masonry drill bit, a chisel or a twist drill bit, comprising a shaft (1) according to any of the claims 1 to 9 and at least one cutting insert, like a cutting plate or a drill head, wherein in particular said shaft comprises at least one helical groove (13, 15) for conveying cutting chips, preferably twisting around said shaft (1).

9. Method for manufacturing a drilling tool, such as a masonry drill bit, a chisel or a twist drill bit, comprising a shaft (1) designed according to one of the claims 1 to 7 with a longitudinal axis (A), a radial plane (R-R) extending perpendicular relative to said longitudinal axis (A), a mounting portion for fixing said shaft (1) to a tool and a head portion (5) located axially opposite said mounting portion and comprising a circumferential exterior surface (3) extending substantially perpendicular to said radial plane (R-R), **characterized in that** a saw tool is used to form a chucking seat structure (17).

10. Method according to claim 9, **characterized in that** said saw tool comprises a row of teeth running along a loop-like closed path, wherein said row of teeth enters into cutting engagement with said head portion at an inbound cutting line of said circumferential exterior surface (3) and leaves cutting engagement at an outbound cutting line of said circumferential exterior surface.

11. Method according to claim 10, **characterized in that** said row of teeth is axially fed into said head portion and/or runs parallel relative to said radial plane, and/or said loop-like closed path is at least partially, particularly completely, cylindrically curved between said inbound cutting line and said outbound cutting line, wherein in particular the radius of the cylindrically curved path is at least 50% of the minimum radius of the head portion of the shaft (1).

12. Method according to claim 10 or 11, **characterized in that** said row of teeth is an endless row of teeth, and/or said saw tool is a hole saw or a band saw, wherein in particular a nominal diameter of the hole saw is larger than a nominal diameter of said head portion.

13. Method according to any of the claims 9 to 12, **characterized in that** said saw tool is moved at least two times, particularly exactly two, three, four or six times sequentially axially into cutting engagement with the head portion and out of cutting engagement to form said chucking seat structure (17), wherein in particular said shaft (1) is rotated by a predetermined angle each time after said saw tool is moved out of cutting engagement.

## Patentansprüche

1. Welle (1) für ein Bohrwerkzeug, wie etwa einen Mauerbohrer, einen Meißel oder einen Spiralbohrer, wobei die Welle eine Längsachse (A) definiert sowie eine radiale Ebene (R-R), die senkrecht zur Längsachse (A) liegt, wobei die Welle einen Montageabschnitt zur Befestigung der Welle (1) an einem Werkzeug umfasst, wie etwa einer Bohrmaschine oder einem Bohrhammer, und einen Kopfabschnitt (5) zum formschlüssigen Aufnahmen eines Schneideinsatzes des Bohrwerkzeugs, wobei der Kopfabschnitt (5) eine Umfangsaußenfläche (3) umfasst, die sich relativ zur radialen Ebene (R-R) im Wesentlichen senkrecht erstreckt und an ihrem axialen Ende eine Spannsitzstruktur (17) zum Aufnehmen des Schneideinsatzes bildet, wobei die Spannsitzstruktur (17) eine Wandflächenanordnung (49) bildet, die dem Einsatz zugewandt ist und relativ zur radialen Ebene (R-R) im Wesentlichen senkrecht liegt, wobei die Wandflächenanordnung (49) zylindrisch geformt ist und sich von der Umfangsaußenfläche (3) des Kopfabschnitts (5) weg erstreckt, wobei die Spannsitzstruktur (17) eine Vielzahl von Wandflächenbereichen (51, 53, 55) umfasst, die dem Schneideinsatz zugewandt sind, wobei jeder relativ zur radialen Ebene (R-R) senkrecht liegt und zylindrisch geformt ist und sich entweder von der Umfangsaußenfläche weg oder zwischen anderen der Vielzahl von Wandflächen (51, 53, 55) erstreckt, wobei jede der Vielzahl von Wandflächenbereichen (51, 53, 55) eine konkave oder konvexe zylindrische Form umfasst, **dadurch gekennzeichnet**, dassjede der Vielzahl von Wandflächenbereichen (51, 53, 55) mit einem Gegenwandflächenbereich (51, 53, 55) verknüpft ist, der relativ zu einem anderen Zentrum der Zylindrizität dieselbe konkave oder konvexe zylindrische Form aufweist, wobei jeder der Vielzahl von Wandflächenbereichen (51, 53, 55) und sein entsprechender Gegenwandflächenbereich (51, 53, 55) einander zugewandt sind, derart, dass sie eine Stützseite und eine Gegenstützseite zum Befestigen des Schneideinsatzes in der Spannsitzstruktur (17) bereitstellen.

2. Welle (1) nach Anspruch 1, **dadurch gekennzeichnet, dass** die Wandflächenanordnung (49) mindestens einen Zylinderradius umfasst, der größer ist als 50 %, insbesondere größer als 100 %, vorzugsweise zwischen 80 % und 150 % des Nennradius des Kopfabschnitts (5).

3. Welle (1) nach Anspruch 1 oder 2, **dadurch gekennzeichnet, dass** jeder der Vielzahl von Wandflächenbereichen (51, 53, 55) mit Bezug auf einen anderen der Vielzahl von Wandflächenbereichen (51, 53, 55) achssymmetrisch, insbesondere relativ zu einer Durchmesserachse der Welle (1), und/oder mit Bezug auf mindestens einen anderen der Vielzahl von Wandflächenbereichen (51, 53, 55) relativ zur Längsachse (A) in einem Winkel von 60°, 90°, 120° und/oder 180° drehsymmetrisch angeordnet ist.

4. Welle (1) nach einem der vorhergehenden Ansprüche, **dadurch gekennzeichnet, dass** die Spannsitzstruktur mindestens eine Spannbacke (7a-7f) umfasst, bei der eine Außenseite mindestens teilweise vom Wandflächenbereich (51, 53) gebildet ist, und mindestens eine weitere Spannbacke (7a-7f), bei der eine Außenseite mindestens teilweise von einem Wandflächenbereich (51-53) gebildet ist, der dem Einsatz zugewandt ist, wobei die Spannbacke (7a-7f) und die mindestens eine weitere Spannbacke (7a-7f) radial diametral zueinander angeordnet sind.

5. Welle (1) nach einem der vorhergehenden Ansprüche, **dadurch gekennzeichnet, dass** die Wandfläche (49) die Umfangsaußenfläche (3) an einer axialen Kante schneidet, von der sich der Wandflächenbereich (51, 53) weg erstreckt, wobei die axiale Kante relativ zur radialen Ebene (R-R) gerade und insbesondere senkrecht liegt und/oder sich insbesondere ununterbrochen bis zu einem Schnittpunkt mit der Umfangsaußenfläche (3) erstreckt.

6. Welle (1) nach einem der vorhergehenden Ansprüche, **dadurch gekennzeichnet, dass** die Spannsitzstruktur (17) mindestens zwei Wandflächenbereiche umfasst, die insbesondere mit einem anderen Zylinderradius zum selben Zentrum der Zylindrizität insbesondere zylindrisch geformt sind, wobei insbesondere die zwei Wandflächenbereiche (51, 53) einen Schlitz (21, 23, 25, 27, 29, 31) bilden, der sich teilweise hohlzylindrisch durch den Kopfabschnitt erstreckt.

7. Welle (1) nach einem der vorhergehenden Ansprüche, **dadurch gekennzeichnet, dass** die Wandfläche (49) durch ein Sägewerkzeug gebildet ist, das insbesondere eine axiale Arbeitszuführungsrichtung aufweist, und/oder darin, dass die Spannsitzstruktur (17) insbesondere ausschließlich durch axiales Sägen in den Kopfabschnitt gebildet ist.

8. Bohrwerkzeug, insbesondere ein Bohrer, wie etwa ein Mauerbohrer, ein Meißel oder ein Spiralbohrer, das eine Welle (1) nach einem der Ansprüche 1 bis 9 und mindestens einen Schneideinsatz, wie eine Schneidplatte oder ein Bohrkopf, umfasst, wobei insbesondere die Welle mindestens eine Spiralnut (13, 15) zum Transportieren von Schneidspänen umfasst, die sich vorzugsweise um die Welle (1) windet.

9. Verfahren zum Herstellen eines Bohrwerkzeugs, wie etwa eines Mauerbohrers, eines Meißels oder eines Spiralbohrers, das eine Welle (1) umfasst, die gemäß einem der Ansprüche 1 bis 7 mit einer Längsachse (A), einer radialen Ebene (R-R), die sich relativ zur Längsachse (A) senkrecht erstreckt, einem Montageabschnitt zum Befestigen der Welle (1) an einem Werkzeug und einem Kopfabschnitt (5), der axial gegenüber dem Montageabschnitt positioniert ist, konzipiert ist und eine Umfangsaußenfläche (3) umfasst, die sich im Wesentlichen senkrecht zur radialen Ebene (R-R) erstreckt, **dadurch gekennzeichnet, dass** ein Sägewerkzeug verwendet wird, um eine Spannsitzstruktur (17) zu bilden.

10. Verfahren nach Anspruch 9, **dadurch gekennzeichnet, dass** das Sägewerkzeug eine Reihe von Zähnen umfasst, die entlang eines schleifenartigen geschlossenen Pfades verlaufen, wobei die Reihe von Zähnen an einer nach innen gerichteten Schneidlinie der Umfangsaußenfläche (3) in einen Schneideingriff mit dem Kopfabschnitt eintritt und den Schneideingriff an einer nach außen gerichteten Schneidlinie der Umfangsaußenfläche verlässt.

11. Verfahren nach Anspruch 10, **dadurch gekennzeichnet, dass** die Reihe von Zähnen axial in den Kopfabschnitt zugeführt wird und/oder relativ zur radialen Ebene parallel verläuft und/oder der schleifenartige geschlossene Pfad zwischen der nach innen gerichteten Schneidlinie und der nach außen gerichteten Schneidlinie mindestens teilweise, insbesondere vollständig, zylindrisch gekrümmt ist, wobei insbesondere der Radius des zylindrisch gekrümmten Pfades mindestens 50 % des Mindestradius des Kopfabschnitts der Welle (1) beträgt.

12. Verfahren nach Anspruch 10 oder 11, **dadurch gekennzeichnet, dass** die Reihe von Zähnen eine endlose Reihe von Zähnen ist und/oder das Sägewerkzeug eine Lochsäge oder eine Bandsäge ist, wobei insbesondere ein Nenndurchmesser der Lochsäge größer ist als ein Nenndurchmesser des Kopfabschnitts.

13. Verfahren nach einem der Ansprüche 9 bis 12, **dadurch gekennzeichnet, dass** das Sägewerkzeug mindestens zweimal, insbesondere genau zweimal, dreimal, viermal oder sechsmal sequenziell axial in den Schneideingriff mit dem Kopfabschnitt und aus dem Schneideingriff bewegt wird, um die Spannsitzstruktur (17) zu bilden, wobei insbesondere die Welle (1) jedes Mal um einen vorbestimmten Winkel gedreht wird, nachdem das Sägewerkzeug aus dem Schneideingriff bewegt wird.

## Revendications

1. Arbre (1) pour un outil de forage tel qu'un foret à maçonnerie, un burin ou un foret hélicoïdal, ledit arbre définissant un axe longitudinal (A) et un plan radial (R-R) perpendiculaire audit axe longitudinal (A), dans lequel ledit arbre comprend une partie de montage pour la fixation dudit arbre (1) à un outil tel qu'une perceuse électrique ou un performarteau, et une partie de tête (5) pour recevoir conformément à la forme un insert de coupe dudit outil de forage, ladite partie de tête (5) comprenant une surface extérieure circonférentielle (3) s'étendant sensiblement perpendiculairement audit plan radial (R-R) et formant une structure de siège de serrage (17) sur son extrémité axiale pour recevoir ledit insert de coupe, dans lequel ladite structure de siège de serrage (17) forme un agencement de surface de paroi (49) faisant face audit insert et étant sensiblement perpendiculaire audit plan radial (R-R), dans lequel ledit agencement de surface de paroi (49) est en forme de cylindre et s'étend loin de ladite surface extérieure circonférentielle (3) de ladite partie de tête (5), dans lequel ladite structure de siège de serrage (17) comprend une pluralité de sections de surface de paroi (51, 53, 55) faisant face audit insert de coupe, chacune étant perpendiculaire audit plan radial (R-R) et formée de manière cylindrique et s'étendant loin de ladite surface extérieure circonférentielle ou entre d'autres de ladite pluralité de surfaces de paroi (51, 53, 55), dans lequel chacune de ladite pluralité de sections de surface de paroi (51, 53, 55) comprend une forme cylindrique concave ou convexe,
**caractérisé en ce que** chacune de ladite pluralité de sections de surface de paroi (51, 53, 55) est associée à une section de surface de paroi antagoniste (51, 53, 55), présentant la même forme concave ou convexe par rapport à un centre différent de cylindricité, dans lequel chacune de ladite pluralité de sections de surface de paroi (51 53, 55) et sa section de surface de paroi antagoniste correspondante (51, 53, 55) se font face les unes aux autres de sorte qu'elles fournissent une face de support et une face de support antagoniste pour la fixation dudit insert de coupe dans ladite structure de siège de serrage (17).

2. Arbre (1) selon la revendication 1, **caractérisé en ce que** ledit agencement de surface de paroi (49) comprend au moins un rayon de cylindre qui est supérieur à 50 %, particulièrement supérieur à 100%, de préférence entre 80% et 150% du rayon nominal de ladite partie de tête (5).

3. Arbre (1) selon la revendication 1 ou 2, **caractérisé en ce que** chacune de ladite pluralité de sections de surface de paroi (51, 53, 55) est agencée de manière symétrique à l'axe par rapport à l'autre de ladite pluralité de sections de surface de paroi (51, 53, 55), particulièrement par rapport à un axe de diamètre dudit arbre (1), et/ou symétrique en rotation par rapport à au moins une autre de ladite pluralité de sections de surface de paroi (51, 53, 55) par rapport audit axe longitudinal (A) selon un angle de 60°, 90°, 120° et/ou 180°.

4. Arbre (1) selon l'une quelconque des revendications précédentes, **caractérisé en ce que** ladite structure de siège de serrage comprend au moins une mâchoire de serrage (7a-7f), dont un extérieur est formé au moins partiellement par ladite section de surface de paroi (51, 53), et au moins une autre mâchoire de serrage (7a-7f), dont un extérieur est formé au moins partiellement par une section de surface de paroi (51-53) qui fait face audit insert, ladite mâchoire de serrage (7a-7f) et ladite au moins une autre mâchoire de serrage (7a-7f) étant agencées radialement diamétralement l'une à l'autre.

5. Arbre (1) selon l'une quelconque des revendications précédentes, **caractérisé en ce que** ladite surface de paroi (49) croise ladite surface extérieure circonférentielle (3) sur une arête axiale loin de laquelle ladite section de surface de paroi (51, 53) s'étend, ladite arête axiale étant droite et particulièrement perpendiculaire audit plan radial (R-R), et/ou s'étend particulièrement sans interruption jusqu'à une intersection avec ladite surface extérieure circonférentielle (3).

6. Arbre (1) selon l'une quelconque des revendications précédentes, **caractérisé en ce que** ladite structure de siège de serrage (17) comprend au moins deux sections de surface de paroi particulièrement en forme de cylindre au même centre de cylindricité particulièrement avec un rayon de cylindre différent, dans lequel particulièrement lesdites deux sections de surface de paroi (51, 53) forment une fente (21, 23, 25, 27, 29, 31) qui s'étend en partie de manière cylindrique et creuse au travers de ladite partie de tête.

7. Arbre (1) selon l'une quelconque des revendications précédentes, **caractérisé en ce que** ladite surface de paroi (49) est formée par un outil de sciage, particulièrement présentant une direction d'alimentation de travail axial et/ou **en ce que** la structure de siège de serrage (17) est formée particulièrement exclusivement par sciage axial dans la partie de tête.

8. Outil de forage, particulièrement un foret, tel qu'un foret à maçonnerie, un burin ou un foret hélicoïdal, comprenant un arbre (1) selon l'une quelconque des revendications 1 à 9 et au moins un insert de coupe, comme une plaque de coupe ou une poupée porte-broche, dans lequel en particulier ledit arbre comprend au moins une rainure hélicoïdale (13, 15) pour le transport de copeaux, de préférence s'enroulant autour dudit arbre (1).

9. Procédé de fabrication d'un outil de forage tel qu'un foret à maçonnerie, un burin ou un foret hélicoïdal, comprenant un arbre (1) conçu selon l'une quelconque des revendications 1 à 7 avec un axe longitudinal (A), un plan radial (R-R) s'étendant perpendiculairement audit axe longitudinal (A), une partie de montage pour la fixation dudit arbre (1) à un outil et une partie de tête (5) située axialement à l'opposé de ladite partie de montage et comprenant une surface extérieure circonférentielle (3) s'étendant sensiblement perpendiculairement audit plan radial (R-R), **caractérisé en ce qu'**un outil de sciage est utilisé pour former une structure de siège de serrage (17).

10. Procédé selon la revendication 9, **caractérisé en ce que** ledit outil de sciage comprend une rangée de dents s'étendant le long d'une voie fermée en boucle, dans lequel ladite rangée de dents entre en prise de coupe avec ladite partie de tête sur une ligne de coupe d'entrée de ladite surface extérieure circonférentielle (3) et quitte la prise de coupe sur une ligne de coupe de sortie de ladite surface extérieure circonférentielle.

11. Procédé selon la revendication 10, **caractérisé en ce que** ladite rangée de dents est axialement amenée dans ladite partie de tête et/ou s'étend parallèlement par rapport audit plan radial, et/ou ladite voie fermée en boucle est au moins partiellement, particulièrement complètement, courbée de manière cylindrique entre ladite ligne de coupe d'entrée et ladite ligne de coupe de sortie, dans lequel en particulier le rayon de la voie courbée de manière cylindrique s'élève à au moins 50 % du rayon minimum de la partie de tête de l'arbre (1).

12. Procédé selon la revendication 10 ou 11, **caractérisé en ce que** ladite rangée de dents est une rangée de dents sans fin et/ou ledit outil de sciage est une scie cloche ou une scie à ruban, dans lequel en particulier un diamètre nominal de la scie cloche est plus grand qu'un diamètre nominal de ladite partie de tête.

13. Procédé selon l'une quelconque des revendications 9 à 12, **caractérisé en ce que** ledit outil de sciage est déplacé au moins deux fois, particulièrement exactement deux, trois, quatre ou six fois séquentiellement axialement en prise de coupe avec la partie de tête et hors de prise de coupe pour former ladite structure de siège de serrage (17), dans lequel en particulier ledit arbre (1) est tourné à un angle prédéterminé chaque fois après que ledit outil de sciage est déplacé hors de prise de coupe.
